# EUROPÄISCHE PATENTANMELDUNG

(11) **EP 0 558 784 A1**
(43) Veröffentlichungstag der Anmeldung: **08.09.1993**
(21) Anmeldenummer: 92103811.3
(22) Anmeldetag: 06.03.1992
(51) Int. Cl.: C02F 11/00, C02F 11/12, C02F 11/18

(54) **Verfahren zur Eliminierung von Schwermetallen aus Klärschlamm**

(71) Anmelder: Thiele, Heinrich, Dr., D-83313 Siegsdorf (DE)
(72) Erfinder: Thiele, Heinrich, Dr., D-83313 Siegsdorf (DE)

(57) **Zusammenfassung**

Bei einem Verfahren zur Schwermetalleliminierung aus Klärschlamm ist vorgesehen, daß der Eliminierungsprozeß in den Trocknungsprozeß integriert und zwischen der Vorentwässerung (1) und der Granulierung (12) angeordnet ist. Hierbei wird der Schlamm unter Verwendung der in der Trocknung (15) anfallenden Brüden auf 70 bis 75 °C erwärmt (3), was unter Freisetzung des Zellwassers und der in den Schlammpartikeln inkorporierten Schwermetalle eine Denaturierung der Eiweißverbindungen bewirkt. Der Übergang der Schwermetalle von der festen in die flüssige Phase wird durch Beimischung eines aus Säure bestehenden Komplexbildners herbeigeführt (5). Die Phasen werden durch Zentrifugieren (7) getrennt. Der Feststoff wird nachgewaschen (11), granuliert (12) und getrocknet. Das in der Trocknung (15) anfallende Granulat wird zur Düngung von mit Chinaschilf bestandenen Böden eingesetzt. Mit dem vermahlenen Schilf wird ein der Schlammaufbereitungsanlage zugeordnetes Kraftwerk (18) betrieben, wobei der Abdampf zur Trocknung des Schlamms und zum Nachwaschen des Feststoffes (11) verwandt wird. Der aufbereitete Klärschlamm kann auch bei der Rekultivierung von Brachland, insbesondere Bergbauhalden verwandt werden.

## Beschreibung

Die Erfindung bezieht sich auf ein Verfahren zur Eliminierung von Schwermetallen aus Klärschlamm sowie auf die Verwertung des entmetallisierten Schlamms.

Die Nutzung der im kommunalen Klärschlamm enthaltenen Pflanzennährstoffe scheitert in der Praxis an dem mehr oder minder hohen Gehalt an gesundheitsgefährdenden Schwermetallen. Zu diesen gehören vor allem Blei, Kupfer, Cadmium, Zink, Nickel, Eisen und Chrom. In Sonderheit gilt das für die in industrialisierten Ballungsgebieten anfallenden Schlämme. Die Entsorgung dieses Abfalls bereitet den Kommunen zunehmende Schwierigkeiten. Zum einen werden die für die Deponie in Betracht kommenden Flächen immer knapper und teurer, zum andern erfordert der Schutz des Grundwassers sorgfältige und mit einem beträchtlichen Kostenaufwand verbundene Abdichtungen. Im übrigen setzt sich in der Bevölkerung die Erkenntnis durch, daß die Deponien von heute wegen ihres Schadstoffgehalts die Altlasten von morgen sind. Die Kosten, die die Behebung dieser Altlasten künftig erfordern werden, lassen sich nach Meinung der Fachwelt nicht abschätzen. - Seit einigen Jahren wird die "thermische Verwertung" des Schlamms propagiert. Dieser Terminus ist insofern irreführend, als der Schlamm vor der Verbrennung getrocknet werden muß und der Energiebedarf der Trocknung den bei der Verbrennung erzielten Energiegewinn übersteigt. Die Energiebilanz ist mithin negativ. Das gilt auch hinsichtlich der Vernichtung der im Klärschlamm enthaltenen Pflanzennährstoffe, weil diese durch mit hohem Energieaufwand hergestellten Kunstdünger ersetzt werden müssen. - Zudem wird bei der Verbrennung das Schwermetallproblem nur auf die Asche verlagert.

Dies kann zwar durch Anhebung der Verbrennungstemperatur auf etwa 1.300 °C ausgeschlossen werden. In diesem Fall fällt an Stelle einer auslaugbaren Asche eine nicht auslaugbare Schlacke an. Das aber hat neben der CO₂-Emission auch noch die Emission von Stickoxid zur Folge.

Diese Überlegungen haben zur Entwicklung von Zwei Verfahren geführt, mit denen die im Klärschlamm enthaltenen Schwermetalle eliminiert werden können. Nach dem in der DE 29 11 399 A 1 beschriebenen Verfahren werden dem Schlamm aus einer organischen Säure bestehende Komplexbildner beigemischt, die den Übergang der in der festen Phase enthaltenen Schwermetalle in die flüssige Phase bewirken. Als Komplexbildner sind vor allem Wein-, Essig und Zitronensäure vorgesehen. Die feste und die flüssige Phase werden durch Dekantieren, also durch Ruhenlassen der Suspension und anschließendes Zentrifugieren getrennt. Dieses Verfahren ist aber mit langen Verweilzeiten verbunden und damit für den großtechnischen Einsatz nicht geeignet.

Das andere Verfahren ist in der EP-00 72 885 B 1 beschrieben. Es wurde zum Zwecke der Dekontaminierung von solchen Schlämmen entwickelt, die beim Ausbaggern von Fahrrinnen, Liegeplätzen und Hafenbecken anfallen. Sie bestehen in der Regel zu etwa 15 % aus organischen Bestandteilen und zu 85 % aus mineralischen Stoffen. Die überwiegend in der festen Phase enthaltenen Schwermetalle werden durch Einsatz von Mineralsäure, insbesondere Salzsäure in die flüssige Phase überführt. Auch bei diesem Verfahren ist mit langen Verweilzeiten zu rechnen. Ein die Wirtschaftlichkeit stark beeinträchtigender Faktor besteht darin, daß die vorgesehenen Säuren auch die in hochlegierten Stählen enthaltenen Edelmetalle mobilisieren. Daher müssen die mit der Säure in Berührung kommenden Teile kunststoffbeschichtet sein. Soweit es sich um einfache Behälter und Rohrleitungen handelt, ist diese Forderung ohne weiteres zu erfüllen. Bei Zentrifugen und anderen bewegliche Teile enthaltenden Einrichtungen ist das jedoch nicht möglich. Daher müssen zur Entwässerung kunststoffbeschichtete Pressen, z. B. Kammerfilterpressen verwandt werden. Das aber schließt die Durchführung eines kontinuierlichen Prozesses aus. Die betreffende PS enthält abschließend den Hinweis, daß das Verfahren auch auf die Dekontaminierung von kommunalem Klärschlamm angewandt werden könne. Aber auch für diesen Anwendungsfall gelten die oben angeführten Gegenargumente.

Die Erfindung hat sich die Aufgabe gestellt, die Eliminierung der im Klärschlamm enthaltenen Schwermetalle ohne Inkaufnahme der vorstehend aufgeführten Nachteile durchzuführen. Insbesondere verfolgt die Erfindung das Ziel, die im Klärschlamm enthaltenen Pflanzennährstoffe ohne Gefährdung der Nahrungskette voll zu nutzen. Im Hinblick darauf, daß wegen der unterschiedlichen Reaktion der verschiedenen Schwermetalle auf Säure im Durchschnitt nur ein bei 90 % liegender Entmetallisierungsgrad erreicht werden kann und damit der Einsatz des aufbereiteten Schlamms in der Landwirtschaft nach wie vor problematisch ist, hat sich die Erfindung die zusätzliche Aufgabe gestellt, die Verwertung des entmetallisierten Klärschlamms auf den Energiebedarf des Aufbereitungsverfahrens abzustellen und auf diesem Wege die Kosten der Schlammentsorgung zu reduzieren.

Die Erfindung löst die gestellte Aufgabe mit einem Verfahren der eingangs geschilderten Art, dadurch gekennzeichnet, daß die Schwermetalleliminierung in den Trocknungsprozeß integriert und zwischen der Vorentwässerung und der Granulierung des Schlamms angeordnet ist und aus einer Einrichtung zur Erwärmung des Schlamms auf 70 bis 75 °C, aus einer mit einem Rührwerk ausgestatteten Einrichtung zur Beimischung eines aus Säure bestehenden Komplexbildners, aus einer ebenfalls mit einem Rührwerk ausgestatteten Einrichtung zur Beimischung eines Flockungsmittels, aus einer Zentrifuge zum Abtrennen der die Schwermetalle enthaltenden flüssigen Phase, aus einer Einrichtung zum Ausfällen der Schwermetalle aus der flüssigen Phase und aus einer Einrichtung zum Nachwaschen des Feststoffes besteht, wobei der verfahrensgemäß aufbereitete Klärschlamm zur Düngung von mit nachwachsenden Rohstoffen zu bestellenden Böden verwandt wird, die entsprechend aufbereiteten Rohstoffe in einem der Schlammaufbereitungsanlage zugeordneten Kessel zum Zwecke der Stromerzeugung verbrannt werden, der Abdampf mit oder ohne Zwischenschaltung von Wärmetauschern zur Trocknung des Schlamms und die Abwärme der Trocknung unter Zwischenschaltung von Wärmetauschern zur Erwärmung des vorentwässerten Schlamms verwandt wird.

Die weitere Ausbildung der Erfindung ergibt sich aus den Ansprüchen 2 bis 6.

Die von der Erfindung vorgesehene Integrierung des Schwermetall-Eliminierungsprozesses in den Trocknungsprozeß führt durch Entfall der Vor- und Hauptentwässerung im Zuge der Trocknung zur Reduzierung des apparativen Aufwands und hat den zusätzlichen Vorteil, daß die zur Erwärmung des Klärschlamms erforderliche Energie zum Nulltarif zur Verfügung steht. Die Erwärmung des Materials auf 70 bis 75 °C ist deshalb erforderlich, weil sich in diesem Temperaturbereich die überwiegend aus Eiweißverbindungen bestehende Struktur des Klärschlamms verändert. Dies hat die Freisetzung des Zellwassers und der in den einzelnen Schlammpartikeln inkorporierten Schwermetalle zur Folge. Das wiederum ist auf den beabsichtigten übergang der Schwermetalle von der festen in die flüssige Phase von Einfluß. Zufolge der Freisetzung der inkorporierten Schwermetalle können die zur Mobilisierung eingesetzten Säuren die inkorporierten und die mit den Schlammpartikeln assoziierten Schwermetalle gleichzeitig erfassen. Das wiederum führt zu einer Beschleunigung und Intensivierung des Eliminierungsprozesses.

Der Einsatz des entmetallisierten Klärschlamms beim Anbau von Chinaschilf und anderen nachwachsenden Rohstoffen hat gegenüber der bisherigen Praxis, das Abwasser auf schilfbestandenen Flächen zu verrieseln, den ins Gewicht fallenden Vorteil, daß damit die nur mit hohem Kostenaufwand zu beseitigende Kontaminierung dieser Böden verhindert wird. - Im übrigen hat der Anbau von Chinaschilf den Vorteil, daß er selbst in gemäßigten Klimazonen pro Flächeneinheit den 15fachen Ertrag an Biomasse erbringt als ein aus Laub- oder Nadelbäumen bestehender Wald. In warmen Klimazonen ist der Ertrag wesentlich höher. Daher ist das erfindungsgemäße Verfahren für energiearme Entwicklungsländer ein geeignetes Mittel, ihre Energiebilanz zu verbessern. - Daneben schließt das Verfahren die Belastung der Flüsse mit Schwermetallen aus und trägt damit auch zur Reinhaltung des Grundwassers bei. - Die Verbrennung des vermahlenen Schilfs in einem der Schlammaufbereitungsanlage zugeordneten Kraftwerk dient auf indirektem Weg der Reduzierung der Entsorgungskosten und hat den zusätzlichen Vorteil, daß der Abdampf der Turbine zum Trocknen des Schlamms und auch zum Nachwaschen des in der Hauptentwässerung anfallenden Feststoffs verwandt werden kann.

Ökologische Effekte werden auch mit der von der Erfindung vorgesehenen Variante erreicht, nach der der aufbereitete Klärschlamm zur Rekultivierung der beim Kohle-, Erz- und Kalibergbau entstehenden Kippen und Halden verwandt wird. Die Rekultivierung dieser Halden liegt nicht nur im Interesse des Wasserhaushalts, sondern ist in stark industrialisierten Gebieten auch wegen der im Wege der Photosynthese sich vollziehenden Umwandlung von Kohlenstoff in Sauerstoff erforderlich. - Die von der Erfindung getroffene Anordnung, dem Klärschlamm bei der Granulierung humusbildende Stoffe, z. B. aus Biomüll gewonnenen Kompost beizumischen, unterstützt die Rekultivierungsmaßnahmen und reduziert auch die Kosten der Hausmüllentsorgung.

Die im Wege der Fällung aus der flüssigen Phase ausgeschiedenen Schwermetalle müssen zwar über eine sorgfältig abgedichtete Sonderdeponie entsorgt werden. Da aber ein Kubikmeter Klärschlamm von 5 % TR nur 10 bis 15 kg Schwermetallkonzentrat enthält, ist das mit keinen ins Gewicht fallenden Kosten verbunden.

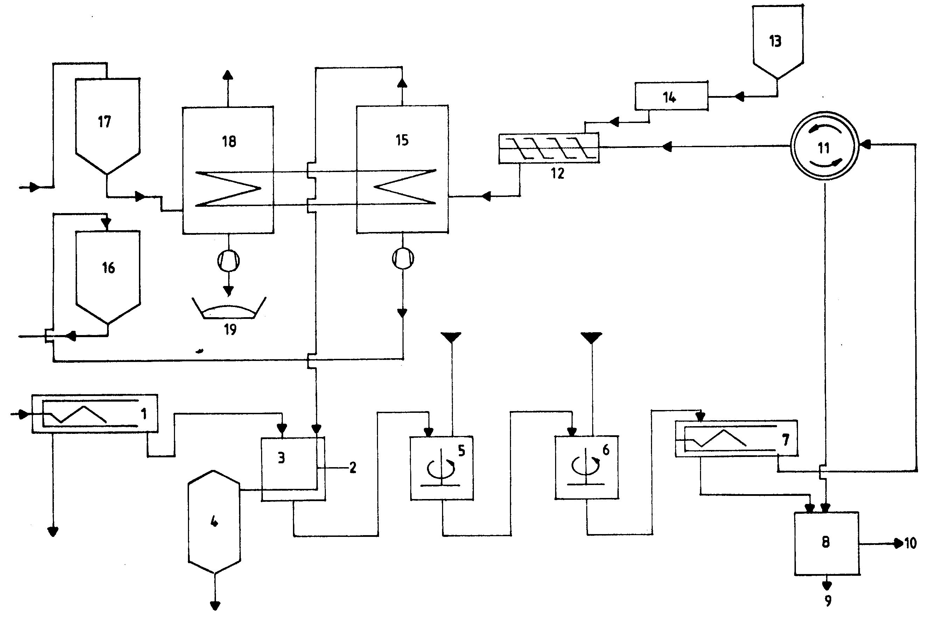

Das Verfahren ist in der anliegenden Zeichnung schematisch dargestellt: Sie zeigt die für die Vorentwässerung des Schlamms bestimmte Zentrifuge 1, mit der in der Regel ein zwischen 22 und 25 % liegender Entwässerungsgrad erreicht wird. Von dort gelangt der eingedickte Schlamm in einen aus Edelstahl gefertigten und mit Wärmetauschern (2) ausgestatteten Behälter 3, wobei die Erwärmung mit den im Trockner anfallenden Brüden durchgeführt wird. Neben diesem Behälter ist ein Kondensator 4 erkennbar. Die Beimischung des aus einer organischen und/oder einer mineralischen Säure bestehenden Komplexbildners kann in einem mit einem Rührwerk ausgestatteten und ebenfalls aus Edelstahl gefertigten Behälter 5 durchgeführt werden. Die von der Erfindung getroffene Anordnung, den Mischprozeß unter erhöhter Turbulenz durchzuführen, hat einen schnelleren und intensiveren Übergang der mit den einzelnen Schlammpartikeln assoziierten Schwermetalle in die flüssige Phase zur Folge. Turbulentes Mischen führt zwar zu einer starken Schaumbildung. Diese kann aber durch Einsatz eines Antischaummittels behoben werden. - Für die Beimischung eines Flockungsmittels kann ein zusätzlicher Behälter 6 vorgesehen werden. - Anschließend gelangt der Schlamm in die zur Trennung der Phasen bestimmte Zentrifuge 7. Das Filtrat wird in einen Behälter zum Ausfällen der Schwermetalle 8 geführt. Das schwermetallhaltige Konzentrat wird am Boden abgezogen 9 und in einer Sonderdeponie abgelagert, während das Wasser 10 in den Wasserkreislauf zurückgeführt wird. - Die noch etwa 30 % der Schwermetalle enthaltende Feststoffmasse, gelangt in eine zur Nachwäsche bestimmte Einrichtung 11, wobei der mechanische Waschvorgang mit dem Abdampf eines zugeordneten Kraftwerkes unterstützt werden kann. Die die Schwermetalle enthaltende Flüssigkeit wird in den zum Ausfällen bestimmten Behälter 8 geleitet. In diesem Arbeitsgang wird ein Entmetallisierungsgrad von etwa 90 % erreicht. - Der entmetallisierte Schlamm wird in einen zur Granulierung bestimmten Mischer 12 geführt. Um den Gebrauchswert des Endprodukts zu erhöhen, werden dem Schlamm humusbildende Stoffe beigesetzt, z. B. aus Biomüll gewonnener Kompost oder feinvermahlene Holzabfälle. Zu diesem Zweck ist ein Silo 13 und eine Mahleinrichtung 14 vorgesehen. - Der granulierte Schlamm wird in dem aus einem Wirbelschichtbehälter bestehenden Trockner 15 geführt. Die Trocknungstemperatur liegt bei 125 °C. Die am Kopf des Behälters abgezogenen Brüden werden zur Erwärmung des vorentwässerten Schlamms (3). verwandt. Die am Boden abgezogene Trockensubstanz wird in einem Silo 16 zwischengelagert und zur Düngung von mit nachwachsenden Rohstoffen, z. B. miscanthus sinensis, bestandenen Böden verwandt. - Diese bis zu 7 Meter hohe Pflanze ergibt zufolge ihres schnellen Wachstums pro Flächeneinheit den 15fachen Ertrag eines aus Laub- oder Nadelbäumen bestehenden Waldes. - Das abgeerntete Schilf wird zwecks Einsatzes in einer Wirbelschichtfeuerung - in der Zeichnung nicht dargestellt - vermahlen und in einem entsprechenden Silo 17 zwischengelagert. Die Verbrennung erfolgt in einer Wirbelschichtfeuerung 18, wobei der gewonnene Dampf zur Stromerzeugung verwandt wird. Der in der Turbine anfallende Abdampf wird zum Trocknen des Klärschlamms und zum Nachwaschen des Feststoffes 11 verwandt. Die am Boden des Kessels abgezogene Asche wird in einem Container 19 zwischengelagert. Zufolge der vorangegangenen Schwermetalleliminierung kann die Asche ohne besondere Vorkehrungen deponiert oder im Straßen- und Wegebau eingesetzt werden.
- In Betracht gezogene Druckschriften:: DE 29 11 399 A 1
EP 00 72 885 B 1

## Patentansprüche

1. Verfahren zur Eliminierung von Schwermetallen aus Klärschlamm sowie Verwertung des entmetallisierten Schlamms, **dadurch gekennzeichnet,** daß der auf die Eliminierung der Schwermetalle sich beziehende Prozeß in die Schlammtrocknung integriert und zwischen der Vorentwässerung (1) und der Granulierung (12) des Schlamms angeordnet ist und aus einer Einrichtung zur Erwärmung des Schlamms auf 70 bis 75 °C (3), aus einer mit einem Rührwerk ausgestatteten Einrichtung zur Beimischung eines aus Säure bestehenden Komplexbildners (5), aus einer mit einem Rührwerk ausgestatteten Einrichtung zur Beimischung eines Flokkungsmittels (6), aus einer Zentrifuge zum Abtrennen der die Schwermetalle enthaltenden flüssigen Phase (7), aus einer Einrichtung zum Ausfällen der Schwermetalle aus der flüssigen Phase (8) und aus einer Einrichtung zum Nachwaschen des Feststoffes (11) besteht, wobei der erfindungsgemäß aufbereitete Klärschlamm zur Düngung von mit nachwachsenden Rohstoffen zu bestellenden Böden verwandt wird, die entsprechend aufbereiteten Rohstoffe in einem der Schlammaufbereitungsanlage zugeordneten Kessel (18) zum Zwecke der Stromerzeugung verbrannt werden, der Abdampf mit oder ohne - Zwischenschaltung von Wärmetauschern zur Trocknung des Schlamms (15) und die Abwärme der Trocknung unter Zwischenschaltung von Wärmetauschern zur Erwärmung (3) des vorentwässerten Schlamms (1) verwandt wird.

2. Verfahren nach Anspruch 1, **dadurch gekennzeichnet,** daß der Komplexbildner aus einer organischen Säure, z. B. Wein-, Essig- oder Zitronensäure, aus einer gegenüber Edelstahl sich neutral verhaltenden Mineralsäure oder aus einer aus beiden Säuren gebildeten Mischung besteht, wobei die thermische und die chemische Konditionierung des Schlamms durch turbulentes Umrühren bzw. Mischen unterstützt wird.

3. Verfahren nach einem der vorangegangenen Ansprüche, **dadurch gekennzeichnet,** daß Feuerung (18) und Trocknung (15) unter atmosphärischen Bedingungen oder unter Druck geführt werden und der Abdampf des Kraftwerks auch zum Auswaschen des bei der Hauptentwässerung anfallenden Feststoffes (11) verwendet wird, wobei der Dampf innerhalb oder außerhalb der Wascheinrichtung eingesetzt werden kann.

4. Verfahren nach einem der vorangegangenen Ansprüche, **dadurch gekennzeichnet,** daß dem Schlamm zum Zwecke der Qualitätsverbesserung bei der Granulierung (12) entsprechend aufbereiteter Biomüll und/oder humusbildende Abfallstoffe beigemischt werden, z. B. Sägemehl, vermahlenes Laub, vermahlenes Altpapier/Altpappe oder der in Getreidemühlen oder Textilfabriken anfallende Staub.

5. Verfahren nach einem der vorangegangenen Ansprüche, **dadurch gekennzeichnet,** daß die nachwachsenden Rohstoffe vorzugsweise aus miscanthus sinensis (China-Schilf) bestehen.

6. Verfahren nach Anspruch 1 bis 4, **dadurch gekennzeichnet,** daß der aufbereitete Klärschlamm zu Bodenverbesserungen, insbesondere bei der Aufforstung von Kippen und Halden des Kohle-, Erz- und Kalibergbaues verwandt wird.
